# EUROPEAN PATENT SPECIFICATION

(11) **EP 1 175 308 B1**
(45) Date of publication and mention of the grant of the patent: **02.04.2003**
(21) Application number: 99920000.9
(22) Date of filing: 23.04.1999
(51) Int. Cl.: B60G 25/00, F16B 5/02, F16F 1/373

(54) **INTERLOCKING VEHICLE BODY MOUNT**
INEINANDERGREIFENDES KAROSSERIELAGER EINES KRAFTFAHRZEUGES
SUPPORT DE VERROUILLAGE POUR CARROSSERIE DE VEHICULE

(43) Date of publication of application: 30.01.2002
(73) Proprietor: The Goodyear Tire & Rubber Company, Akron, Ohio 44316-0001 (US)
(72) Inventor: LANDRY, Joseph, Raymond, Jr., Douchequet, OH 45895 (US)
(74) Representative: Leitz, Paul
(86) International application number: US9908931
(87) International publication number: WO00064691

(56) References cited:
- DE-A- 2 054 998
- US-A- 5 765 819

## Description

### Technical Field

The present invention relates to body mounts utilized in mounting a vehicle body to a vehicle frame or chassis to assist in eliminating the transfer of vibrations from the frame to the vehicle body.

### Background Art

In the manufacturing of vehicles, it is known to mount a vehicle body to the vehicle frame in such a manner to reduce the transfer of vibration from the frame to the body. Were the vibration not reduced, the vehicle passengers would experience a high level of noise and road feel to the vibration transfer. The desired reduction is accomplished by securing the body to the frame utilizing resilient body mounts.

Body mounts typically comprise a load mount. which. when assembled, is located between the frame and vehicle body and a rebound mount which is mounted underneath the vehicle frame. A few typical body mounts are illustrated in U.S. Patents 2,838,339, 3,479,081, and 3,809,427. U.S. Patents 2,838,339 and 3,809,427 disclose two-part mounts, while 3,479,081 discloses a unitary mount for when one end of the mount is inaccessible.

To reduce assembly time of the vehicle, modern manufacturing includes the step of preassembling or premounting the body mount on the frame. With premounted body mounts, the assembly line workers need only insert the fastening means into the vehicle body and the mount.

Various methods have been employed to accomplish the desired preassembly of the body mount. U.S. Patent 3,622,194 that forms the closest prior art according to the preamble of claim 1 discloses a body mount with "snap action" connectors to hold the body mount in an interlocked, preassembly position. U.S. Patent 4,720,075 discloses providing a tabbed washer inside of an alignment tube wherein, when the flared end of a thimble tube is inserted into the alignment tube, the tabs lock the thimble tube into a preassembly position. U.S. Patent 5,170,985 discloses providing the tabbed washer integral with the thimble tube which locks with the narrowed width of the alignment tube to form a preassembly of the body mount.

The tab preassembly means of the above referenced patents provide for sufficient holding of the two components of the body mount; however. manufacturing and assembly of the separate components adds substantially to the cost of the mount. Additionally. the tabs can readily become damaged during manufacturing, resulting in substantial product and time loss during manufacturing. Due to the required corresponding configuration and sizing of the thimble and spacer tubes, the mounts of the prior art are not applicable for preassemblies which must permit a relatively high degree of radial float between the thimble and spacer tubes due to potential misalignment of the apertures of the frame and vehicle body.

Furthermore, with many automotive manufacturers seeking to maximum efficiency with preassembled components. it may be required that the preassembled vehicle components are transported a substantial distance from the preassembly location to the final assembly location. Thus the preassembly must be very robust. and not come apart readily during transportation.

The present invention provides a body mount that is simpler to manufacture and assemble, resulting in a more cost efficient product. The inventive body mount has fewer parts that can potentially be damaged during manufacturing, assembly, and transportation, resulting in less time and material being wasted during manufacturing. The body mount permits a high degree of radial misalignment of the apertures of the frame and vehicle body. Additionally, the inventive body mount is robust, inexpensive to produce, and requires no special tools or awkward procedures to either engage, disengage, or reengage.

### Summary of the Invention

The present invention provides means to fasten a rebound mount to a load mount, in preparation for accommodation of a frame and load mount radially eccentric mismatch to the body fastener, most commonly a nut. While continually maintaining the interlock function, the integral rebound mount and flexible interlock feature allows radial float of the rebound mount, until the securing bolt seeks, engages, and is aligned with the body mounted nut, during assembly of the body to the frame.

A first aspect of the invention is a vehicle body mount comprising an upper load mount and a lower rebound mount. The load mount has an extending central opening with a shoulder portion. The rebound mount has a hollow extending interlock. At least the upper portion of the hollow extending interlock is elastically deformable. The upper portion of the interlock. when in a relaxed state. has a maximum dimension D_{F} less than the corresponding dimensions D_{O}, D_{I} of the extending central opening. The upper portion is capable of expanding to a maximum dimension for retention of the rebound mount in the load mount.

A further aspect of the invention is a vehicle body mount comprising an upper load mount and a lower rebound mount, the rebound being definable by a hollow extending interlock. When the upper portion of the interlock is elastically deformed, the maximum dimension of the hollow extending interlock is greater than the minimum dimension D_{I} of the extending central opening. A further aspect is an interlock dimensioned so that when the upper portion is elastically deformed. the maximum dimension is also less than or equal to the maximum dimension D_{O} of the extending central opening.

A further aspect of the invention is a vehicle body mount wherein the rebound mount has a plurality of vanes spaced about the upper portion of a hollow extending interlock. The rebound mount preferably has three to eight vanes.

A further aspect of the invention employs a rebound mount where the upper portion of an extending interlock is defined by a plurality of vanes, the vanes being comprised of multiple face surfaces. The face surfaces are the radially outer faces of the vanes and at least one of the face surfaces contacts the extending central opening of the load mount when the upper portion of the hollow extending interlock is expanded.

A further aspect of the invention is a vehicle body mount comprising an actuating means that is inserted into the hollow interlock alter the rebound mount is inserted into the load mount. The actuating means may be either a bolt which may or may not be used for the final securing step of attaching the vehicle frame to the vehicle body or an actuating tube.

### Brief Description of Drawings

The invention will be described by way of example and with reference to the accompanying drawings in which:
FIG. 1 is a cross-sectional view of the preassembled vehicle body mount;
FIG. 2 is a perspective view of the rebound mount;
FIG. 3 is a cross-sectional view of the rebound mount along line 3-3;
FIG. 4 is a cross-sectional view of the partially assembled body mount;
FIG. 5 is a cross-sectional view of an alternative preassembly of the body mount.

### Detailed Description of the Invention

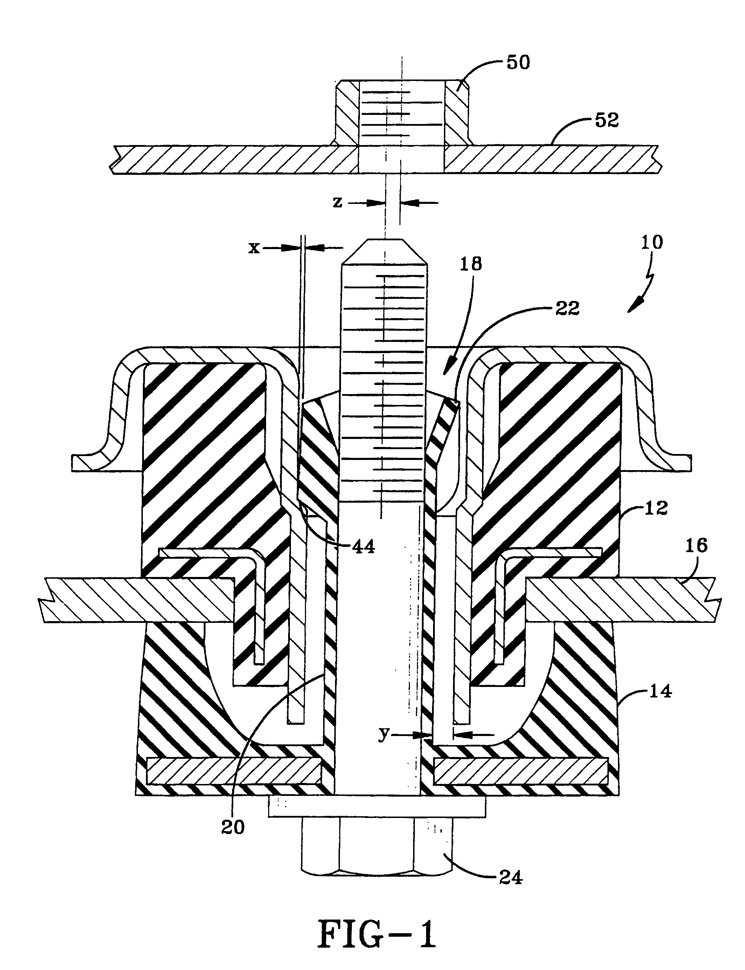

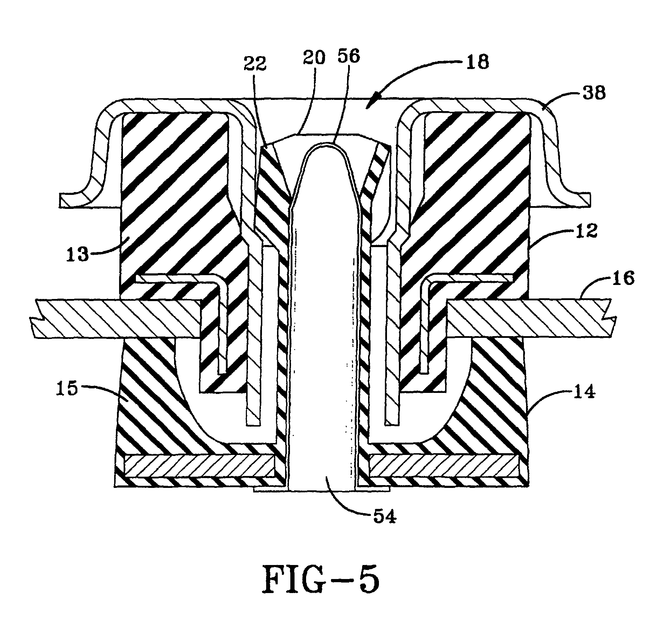

FIG. 1 illustrates a body mount 10 in a temporary interlocking configuration. The configuration permits the body mount 10 to maintain a temporary connection of the upper load mount 12 and a lower rebound mount 14 on a vehicle frame 16. Briefly, the load mount has a central extending opening 18 into which the extending interlock 20 of the rebound mount 14 is inserted. The extending interlock 20 of the rebound mount 14 has a plurality of expansion vanes 22. When any actuating means, such as the illustrated frame-to-body bolt 24 or an actuator tube 54 (see FIG. 5). is inserted into an elevation of the vanes 22. the upper portion of the extending interlock 20 expands radially outward, causing the vanes 22 to interact with the opening 18. This expansion maintains the body mount 10 in the illustrated interlocking configuration.

The pre-interlock insertion of the rebound mount 14 into the load mount 12 requires only a minimal force that is equal to the weight of the rebound mount 14. For a typical sized mount 10, this insertion force is not more than 5 lbs_{f}. Once the vanes 22 are expanded, a retention force greater than ten times the weight of either the load mount 12 or the rebound mount 14 is generated.

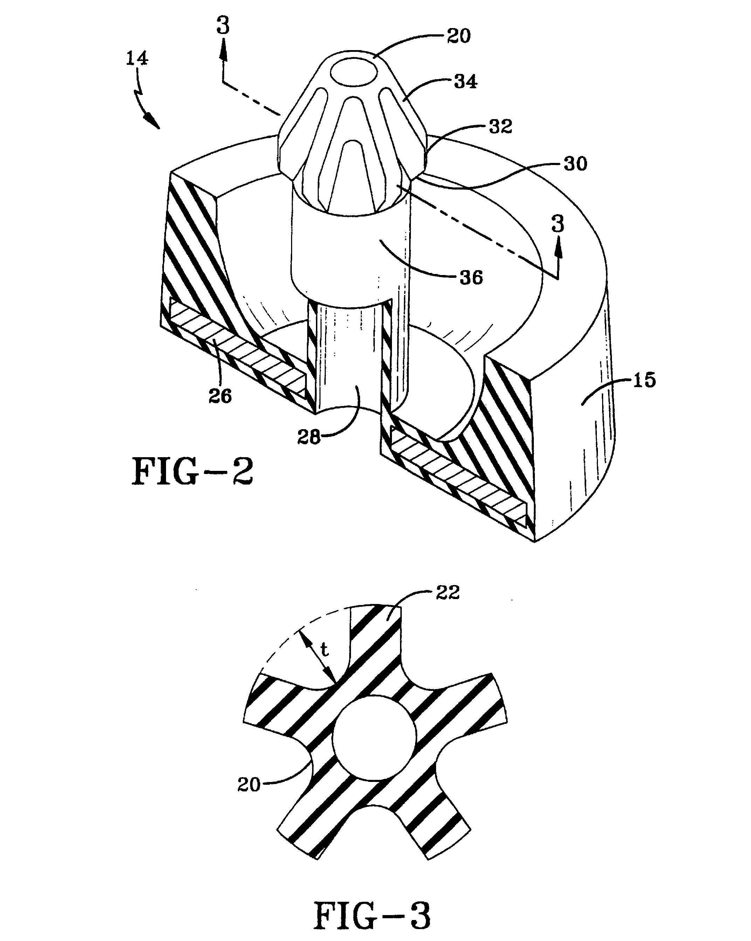

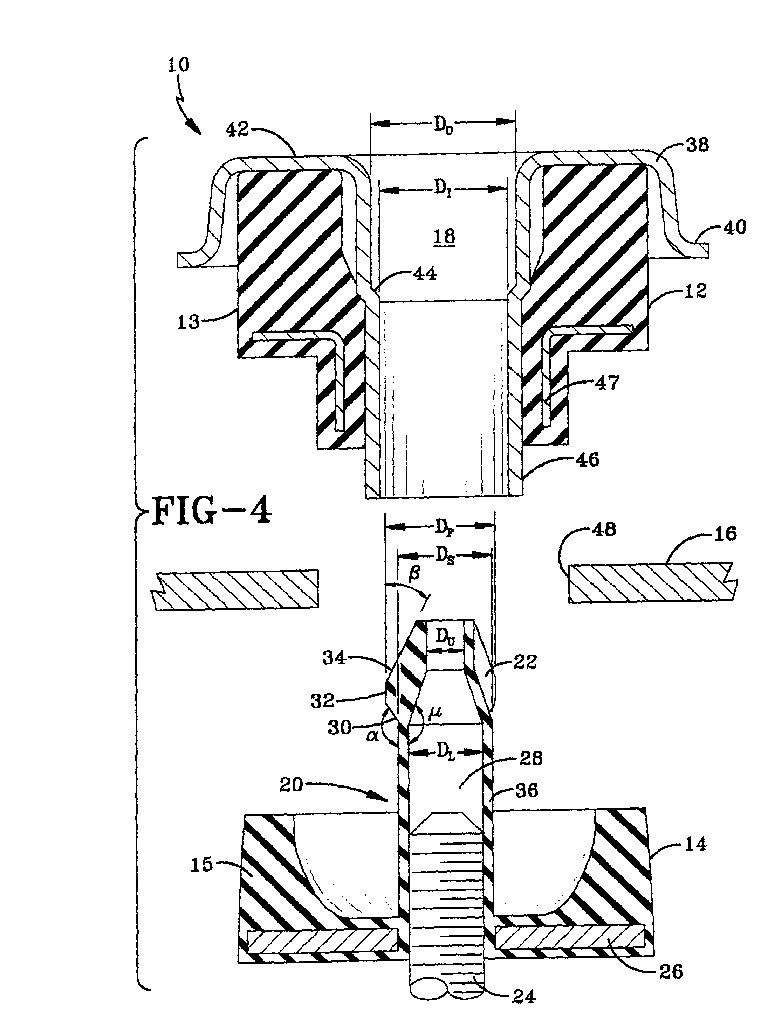

The rebound mount 14, seen illustrated in FIGS. 2 and 3. is predominately a resilient element which is capable of elastically deforming. Extending along the base of the mount 14 is a reinforcing rigid plate 26. The reinforcing plate 26. in its primary embodiment, has a circular configuration with a central opening. Preferably, the plate 26 is a rigid material, for example, steel plate. The lower portion of the extending interlock 20 may also be formed from a rigid material, so long as the upper portion of the interlock 20, including the vanes 22, are formed of a resilient material which is capable of elastically deforming.

The extending interlock 20 extends from the central portion of the rebound mount 14. The extending interlock 20 has a hollow central portion 28 through which the actuating means, herein, the bolt 24, passes. The top portion of the extending interlock 20 is defined by the plurality of expansion vanes 22. The vanes 22 are defined by three surface faces prior to preassembly, as seen in FIGS. 2 and 4. The first face 30 is inclined away from the main portion 36 of the extending interlock 20, with the second face 32 extending from the first face 30. The first face 30 has an inclination angle relative to the main portion 36 of the extending interlock 20. The second face 32, in its primary embodiment, is nominally parallel to the main shaft portion 36. The third face 34 is inclined away from the second face 32 at an angle β. The first face inclination angle is within the range of 90° to 150°, with a preferred range of 120° to 150°; the third face inclination angle β is within the range of 15° to 40°, with a preferred range of 20° to 30°.

The extending interlock 20 is illustrated with five expansion vanes 22; however, the number of vanes 22 may vary from a minimum of three and may even have more than eight vanes. The primary limitations on the number of vanes 22 are the resiliency of the material which forms the upper portion of the extending interlock 20 and the ability of a minimum number of vanes 22 to interact with the extending opening to maintain the preassembled position. Prior to expansion of the vanes 22, the greatest dimension of the top portion of the extending interlock is D_{F}.

The hollow central portion 28 of the extending interlock 20 has a varying internal diameter, see FIG. 4. The lower interlock portion has a fixed internal diameter, D_{L}. The internal diameter decreases coincident with the beginning of the inclination of the first face 30 of the vanes 22. The diameter decrease terminates above the axial location of the juncture of the second 32 and third 34 vane faces. The diameter decrease results in an inclination angle µ relative to the lower interlock portion. The upper internal diameter D_{U} of the extending interlock 20 is approximately 40% to 70% of D_{L}. The vanes 22 have a radial thickness t. see FIG. 3. that is variable and quantified as a result of the result of the quantitative descriptions of D_{F}, D_{U}, µ, and β.

The load mount 12, illustrated in FIG. 4, is a composite of rigid and resilient portions. The rigid portion 38 has a cap shaped portion beginning at the flange 40, which extends axially and then radially to form the top surface 42 of the mount 12. The rigid portion 38 then extends into the load rubber 13, forming the central extending opening 18. As the opening 18 extends through load mount 12, the diameter of the opening 18 decreases. The diameter decrease occurs over a limited length, forming a shoulder 44. The lower portion 46 of the central opening 18 extends past the load rubber 13. A rigid ring 47, as illustrated may reinforce the load rubber 13. Both the ring 47 and the rigid portion 38 are preferably formed of a rigid material, for example, steel. The outer portion of the opening 18 has a diameter D_{O}, and the inner portion has a diameter D_{I}. The inner diameter D_{I} is 80-95 % of D_{O}.

FIG. 4 illustrates the body mount 10 prior to preassembly. The load mount 12 is located over the aperture 48 of the vehicle frame 16, with the lower portion 46 of the central opening 18 aligned to extend into the aperture 48. The rebound mount 14 is brought into place below the vehicle frame 16 and aligned with the central aperture 48 and the lower portion 46 of the central opening 18. The load and rebound mounts 12, 14 are brought towards one another until the load rubber 13 and the rebound rubber 15 of the respective mounts 12, 14 contact the vehicle frame 16, and the end of the lower portion 46 is at a performance defined distance from the central portion of the rebound mount 14, as seen in FIGS. 1 and 5. At any time after the vanes 22 of the rebound mount 14 have axially extended above the shoulder 44 of the central opening 18, the bolt 24 may be pushed into the opening 28 to force the radial expansion of the vanes 22.

Since the bolt 24 has a diameter greater than the decreasing diameter portion of the interlock 20 and the upper shaft portion diameter D_{U}, and the interlock 20 is formed of a resilient material, the upper portion of the interlock 20, and the vanes 22, expand radially outward, see FIG. 1. At least one of the surface faces 30, 32. 34 that define the vane 22 contacts the wall of the opening 18. The final outermost diameter of the vanes is greater than inner diameter D_{I} of the central opening 18, but less than, or equal to, the outer diameter D_{O} of the opening 18, the difference in diameters may be defined as the measurement x. This. and the radial deformability of the vanes 22, creates a flex-float amount y. The flex-float amount y is also the difference between the shaft diameter D_{S} and the inner diameter Dₗ. The flex-float amount y permits the rebound mount 14 and fastener 24 to be able to move laterally relative to the rebound mount 12 and the chassis frame 16. The flex-float amount y allows the rebound mount 14 and the fastener 24 to be realigned to the fixed. or floating, body fastener 50.

The misalignment, z, of the frame aperture 48 to the body fastener 50 is a function of the tolerances associated with each independent frame or body subassembly, and most commonly may add up to 3 or more millimeters in radial misalignment, at any of up to 10 specific locations required to attach the vehicle body 52 to the vehicle frame 16. When the fastener 24 is driven upward into the rebound mount 14, the fastener 24 passes through the extending interlock 20 of the rebound mount 14 and seeks the offset body fastener 50. The flexibility of the vanes 22 allow for minimal side load on the fastener 24.

FIG. 5 illustrates the assembled mount employing an alternate method of preassembly for the interlocking mount 10. Instead of using the bolt 24 to expand the vanes 22, a temporary actuator tube 54 is employed. The actuator tube 54 has a diameter substantially equivalent to the internal shaft diameter D_{L}. The tube 54 is illustrated with a tapering tip 56 for the purpose of providing a smooth interference between the tube 54 and the extending interlock 20. The tube 54 may have a height greater than the extending interlock 20, longer than the illustrated length. The temporary tube 54 is used in the same manner as the bolt 24, except that prior to final assembly of the vehicle body 52 to the vehicle frame 16, the bolt 24 is driven into the tube 54 and penetrates the frangible tube tip 56 prior to the bolt 24 finding the offset body fastener 50. As an alternative, the tube 54 may be removed prior to insertion of the bolt 24. The tube 54 is made of a thin material containing highly frangible serrations or notches that fracture readily upon application of a small amount of upward force from the fastener, most commonly not exceeding 44N (10 lbs_{f}).

## Claims

1. A vehicle body mount (10), the body mount comprising an upper load mount (12) and a lower rebound mount (14), wherein the load mount (12) has an extending central opening (18), the central opening (18) having a shoulder portion (44), and the rebound mount (14) has a hollow extending interlock (20), the rebound mount (14) being **characterized by**:
the upper portion of the hollow extending interlock (20) being elastically deformable, the upper portion when in a relaxed state having a maximum dimension D_{F} less than the corresponding dimensions D_{O}, D_{I} of the extending central opening (18), the upper portion being capable of expansion to a maximum dimension for retention of the rebound mount (14) in the load mount (12).

2. A vehicle body mount (10) in accordance with claim 1 wherein the maximum dimension of the hollow extending interlock (20) when in an expanded state is greater than the minimum dimension D_{I} of the extending central opening (18).

3. A vehicle body mount (10) in accordance with claim 2 wherein the maximum dimension of the hollow extending interlock (20) when in an expanded state is equal to or less than the maximum dimension D_{O} of the extending central opening (18).

4. A vehicle body mount (10) in accordance with claim 1 wherein the rebound mount (14) has a plurality of vanes (22) spaced about the upper portion of the hollow extending interlock (20).

5. A vehicle body mount (10) in accordance with claim 4 wherein the rebound mount (14) has at least three vanes (22).

6. A vehicle body mount (10) in accordance with claim 4 wherein each vane is defined by multiple face surfaces (30, 32, 34) wherein at least one of the face surfaces contacts the extending central opening (18) when the upper portion of the hollow extending interlock (20) is expanded.

7. A vehicle body mount (10) in accordance with claim 1 wherein the mount (10) further comprises an actuating means (24) or (54) for inserting into the hollow interlock (20) after the rebound mount (14) is inserted into the load mount (12).

8. A vehicle body mount (10) in accordance with claim 7 wherein the actuating means is an actuator tube (54).

9. A vehicle body mount (10) in accordance with claim 1 wherein the lower portion of the hollow extending interlock (20) has a dimension D_{S} less than the corresponding dimensions D_{I} of the extending central opening (18).

10. A vehicle body mount (10) in accordance with claim 1 wherein a portion of the inside of the upper portion of the hollow extending interlock (20) is inclined at an angle µ relative to the lower interlock portion.

## Patentansprüche

1. Karosseriehalterung (10) eines Fahrzeugs, wobei die Karosseriehalterung eine obere Lasthalterung (12) und eine untere Rückfederungshalterung (14) aufweist, worin die Lasthalterung (12) eine langgestreckte zentrale Öffnung (18) aufweist, wobei die zentrale Öffnung (18) einen Schulterabschnitt (44) aufweist, und die Rückfederungshalterung (14) einen hohle, langgestreckte Verriegelung (20) aufweist, wobei die Rückfederungshalterung (14) **dadurch gekennzeichnet ist, dass**:
der obere Abschnitt der hohlen, langgestreckten Verriegelung (20) elastisch verformbar ist, wobei der obere Abschnitt, wenn er in einem entspannten Zustand ist, eine maximale Dimension D_{F} hat, die geringer als die entsprechenden Dimensionen D_{O}, D_{I} der langgestreckten zentralen Öffnung (18) ist, wobei der obere Abschnitt zum Festhalten der Rückfederungshalterung (14) in der Lasthalterung (12) zu einer Ausdehnung bis zu einer maximalen Dimension imstande ist.

2. Karosseriehalterung (10) eines Fahrzeugs nach Anspruch 1, worin die maximale Dimension der hohlen, langgestreckten Verriegelung (20), wenn sie in einem gedehnten Zustand ist, größer ist als die minimale Dimension D_{I} der langgestreckten zentralen Öffnung (18).

3. Karosseriehalterung (10) eines Fahrzeugs nach Anspruch 2, worin die maximale Dimension der hohlen, langgestreckten Verriegelung (20), wenn sie in einem gedehnten Zustand ist, gleich der oder kleiner als die maximale Dimension D_{O} der langgestreckten zentralen Öffnung (18) ist.

4. Karosseriehalterung (10) eines Fahrzeugs nach Anspruch 1, worin die Rückfederungshalterung (14) mehrere Flügel (22) aufweist, die um den oberen Abschnitt der hohlen, langgestreckten Verriegelung (20) beabstandet sind.

5. Karosseriehalterung (10) eines Fahrzeugs nach Anspruch 4, worin die Rückfederungshalterung (14) mindestens drei Flügel (22) hat.

6. Karosseriehalterung (10) eines Fahrzeugs nach Anspruch 4, worin jeder Flügel durch mehrere Seitenflächen (30, 32, 34) definiert ist, wobei mindestens eine der Seitenflächen die langgestreckte zentralen Öffnung (18) berührt, wenn der obere Abschnitt der hohlen, langgestreckten Verriegelung (20) gedehnt ist.

7. Karosseriehalterung (10) eines Fahrzeugs nach Anspruch 1, worin die Halterung (10) ferner ein Betätigungsmittel (24) oder (54) zum Einsetzen in die hohle Verriegelung (20) aufweist, nachdem die Rückfederungshalterung (14) in die Lasthalterung (12) eingesetzt ist.

8. Karosseriehalterung (10) eines Fahrzeugs nach Anspruch 7, worin das Betätigungsmittel ein Betätigungsrohr (54) ist.

9. Karosseriehalterung (10) eines Fahrzeugs nach Anspruch 1, worin der untere Abschnitt der hohlen, langgestreckten Verriegelung (20) eine Dimension D_{S} hat, die geringer ist als die entsprechende Dimension D_{I} der langgestreckten zentralen Öffnung (18).

10. Karosseriehalterung (10) nach Anspruch 1, worin ein Abschnitt der Innenseite des oberen Abschnitts der hohlen, langgestreckten Verriegelung (20) in Bezug auf den unteren Verriegelungsabschnitt unter einem Winkel µ geneigt ist.

## Revendications

1. Support de carrosserie de véhicule (10), le support de carrosserie comprenant un support de charge supérieur (12) et un support de rebond inférieur (14), dans lequel le support de charge (12) possède une ouverture (18) s'étendant en position centrale, l'ouverture centrale (18) comportant une portion d'épaulement (44) et le support de rebond (14) possédant un dispositif de verrouillage réciproque de forme creuse (20), le support de rebond (14) étant **caractérisé par le fait que**:
la portion supérieure du dispositif de verrouillage réciproque de forme creuse (20) est élastiquement déformable, la portion supérieure, à l'état relâché possédant une dimension maximale D_{F} inférieure aux dimensions correspondantes D₀, D₁ de l'ouverture (18) s'étendant en position centrale, la portion supérieure étant capable de s'allonger jusqu'à une dimension maximale à des fins de rétention du support de rebond (14) dans le support de charge (12).

2. Support de carrosserie de véhicule (10) selon la revendication 1, dans lequel la dimension maximale du dispositif de verrouillage réciproque de forme creuse (20), à l'état allongé, est supérieure à la dimension minimale D₁ de l'ouverture (18) s'étendant en position centrale.

3. Support de carrosserie de véhicule (10) selon la revendication 1, dans lequel la dimension maximale du dispositif de verrouillage réciproque de forme creuse (20), à l'état allongé, est égale ou inférieure à la dimension maximale D₀ de l'ouverture (18) s'étendant en position centrale.

4. Support de carrosserie de véhicule (10) selon la revendication 1, dans lequel le support de rebond (14) possède plusieurs ailettes (22) espacées autour de la portion supérieure du dispositif de verrouillage réciproque de forme creuse (20).

5. Support de carrosserie de véhicule (10) selon la revendication 1, dans lequel le support de rebond (14) possède au moins trois ailettes (22)

6. Support de carrosserie de véhicule (10) selon la revendication 4, dans lequel chaque ailette (22) est définie par de multiples surfaces frontales (30, 32, 34), dans lequel au moins une des surfaces frontales entre en contact avec l'ouverture (18) s'étendant en position centrale lorsque la portion supérieure du dispositif de verrouillage réciproque de forme creuse (20) est à l'état allongé.

7. Support de carrosserie de véhicule (10) selon la revendication 1, dans lequel le support (10) comprend en outre un moyen d'actionnement (24) ou (54) destiné à venir s'insérer dans le dispositif de verrouillage réciproque de forme creuse (20) après l'insertion du support de rebond (14) dans le support de charge (12).

8. Support de carrosserie de véhicule (10) selon la revendication 7, dans lequel le moyen d'actionnement est un tube d'actionnement (54).

9. Support de carrosserie de véhicule (10) selon la revendication 1, dans lequel la portion inférieure du dispositif de verrouillage réciproque de forme creuse (20) possède une dimension maximale D_{S} inférieure à la dimension correspondante D₁ de l'ouverture (18) s'étendant en position centrale.

10. Support de carrosserie de véhicule (10) selon la revendication 1, dans lequel une portion de l'intérieur de la portion supérieure du dispositif de verrouillage réciproque de forme creuse (20) est inclinée en formant un angle µ par rapport à la portion inférieure du dispositif de verrouillage réciproque de forme creuse (20).
